# EUROPEAN PATENT SPECIFICATION

(11) **EP 1 391 482 B1**
(45) Date of publication and mention of the grant of the patent: **20.05.2009**
(21) Application number: 02018638.3
(22) Date of filing: 20.08.2002
(51) Int. Cl.: C08L 23/16, C08L 23/12, C08F 255/02

(54) **Polypropylene composition**
Polypropylenzusammensetzung
Composition de polypropylène

(43) Date of publication of application: 25.02.2004
(73) Proprietor: Borealis Technology Oy, 06201 Porvoo (FI)
(72) Inventor: Pham, Tung Dr., 4040 Linz (AT); Reichelt, Norbert Dr., 4501 Neuhofen (AT); Myhre, Elina, 3942 Porsgrunn (NO); Gubo, Robert Ing., 4730 Waizenkirchen (AT)
(74) Representative: Grünecker, Kinkeldey, Stockmair & Schwanhäusser Anwaltssozietät

(56) References cited:
- EP-A- 0 863 183
- US-A- 6 077 907
- US-B1- 6 339 123

## Description

### Field of the invention

The invention relates to a polypropylene composition with excellent stiffness/impact balance and high gloss. The propylene compositions are particularly suitable for moulded articles, especially for household applications.

### Background of the invention

Polypropylene is widely used for example as industrial material for example for vehicle parts, electric and electronic parts, packaging materials and household articles as it is generally inexpensive, has advantages of light weight characteristics, mechanical strength, chemical and moisture resistance, heat resistance.
According to the numerous different fields of applications and different processing special characteristics for the individual polypropylene compositions are necessary.
In case of use for the production of household articles an excellent stiffness/impact balance and a perfect surface appearance, especially high gloss is desirable.

US 6077907 discloses a variety of combinations of unmodified and modified propylene polymer compositions, wherein the modified propylene polymers, which are described generally and without disclosing percentages, are treated with peroxides in solid phase.

US 6339123 discloses heterophasic alloys containing organosilane compounds and optionally special styrene butadiene ethylene terpolymers, for which a multitude of possible usages is listed, including fibres and foam. The listed values for mechanical properties like elasticity and impact strength are excellent, but any improvement of such properties is generally adverse to good gloss properties.

JP 54006041 discloses a polypropylene composition with improved gloss and stiffness, comprising a polyethylene resin, barium sulphate, dibenzylidene sorbitol and an alkyl aryl ether. However these compositions although providing acceptable surface properties do not have acceptable stiffness/impact balance.

JP 59113006 discloses polypropylene composition containing segments having a specific propylene chain length distribution. Although those compositions show improved gloss and fluidity and are useful for injection moulding the stiffness/impact balance is far from the desired.

EP 0 863 183 relates to propylene compositions comprising a propylene homopolymer and a propylene-ethylene-copolymer with defined intrinsic viscosity and defined intrinsic viscosity ratio and a defined weight ratio of the homopolymer to the copolymer. The compositions are formed into sheets or blow moulded.
Although the mechanical properties of the compositions seem to be acceptable, the surface properties are not satisfying.

For improving the stiffness and/or impact strength it is known to add classical impact modifiers such as EPR, EOC, SEBS or reactor made heterophasic copolymers. This however is also known to negatively affect surface appearance.

The property profile depends very much on the molecular weight of the impact modifier and how it is dispersed and distributed in the polypropylene matrix (Martuscelli E.: Polypropylene, Vol2, London 1995). Generally, the higher the molecular weight of the impact modifier, the more difficult it is to disperse the impact modifier during the compounding step.

It is known that impact strength is improved by addition of EPR-rubber, but at the same time gloss of the composition decreases.

### Object of the invention

It is an object of the invention to provide a process preparing a polypropylene compositions with excellent stiffness/impact balance and high gloss. Such compositions are particularly useful for injection moulding and may be used especially for the production of household articles.

### Description of the invention

The object has been solved by a process for preparing a polypropylene composition comprising
a) 99 - 90 wt% of a composition comprising 70 - 100 wt% of a propylene homopolymer and/or a copolymer of more than 80 wt% of propylene and of up to 20 wt% of ethylene and/or a C₄-C₁₀ α-olefin and 0 -30 wt% of an elastomeric copolymer from 20 - 80 wt% of ethylene and 80 - 20 wt% of propylene and/or a C₄- C₁₀ α-olefin, where the elastomeric copolymer is discontinuously distributed within the polymer composition and which propylene polymer composition has an MFR > 10g/10 min (230°C/2.16 kg) and
b) 1 - 10 wt% reactively modified heterophasic copolymer with a phase morphology stabilised by chemically bound bifunctionally unsaturated monomers, which is produced by
   a) melting of the heterophasic copolymer, preferably in an extruder
   b) adding from 0.05 to 3 wt% based on the heterophasic copolymer of an organic peroxide as thermally decomposable free radical forming agent, directly into the polymer melt
   c) further adding from 0.01 to 10 wt% based on the heterophasic copolymer of bifunctionally unsaturated monomers directly into the melt
   d) heating the melt to 220 - 250°C to remove unreacted monomers and decomposition products
   e) pelletising.

The heterophasic copolymer for reactive modification is a propylene polymer composition comprising 50 - 90 wt% of a matrix phase comprising a propylene homopolymer and/or a copolymer of more than 80 wt% of propylene and of up to 20 wt% of ethylene and/or a C₄-C₁₀ α-olefin and 10 - 50wt% of an elastomeric copolymer of 20-70% of ethylene and 80 - 30wt% of propylene and/or a C₄-C₁₀ α-olefin, where the elastomeric copolymer is discontinuously distributed in the matrix phase and which reactively modified heterophasic copolymer has an MFR of > 5g/10 min (230°C/2.16 kg), preferably > 10g/10 min (230°C/2.16 kg). The reactively modified heterophasic copolymer is obtained by treatment with free radical forming agents.

Preferably the reactively modified heterophasic copolymer comprises 55 - 75 wt% of a propylene homopolymer and/or a copolymer of more than 85 wt% of propylene and of up to 15 wt% of ethylene and/or a C₄-C₁₀ α-olefin and 25 - 45 wt% of an elastomeric copolymer of 20-70% of ethylene and 80 - 30wt% of propylene and/or a C₄-C₁₀ α-olefin.

The heterophasic copolymer is reactively modified to form compound b) of the claimed composition by heating with an organic peroxide. The peroxide is decomposed and free radicals are formed. These free radicals undergo transfer with the polymer upon abstracting a hydrogen from the polymer backbone forming macroradicals. These peroxide induced radicals may recombine in particular in the presence of a bifunctionally unsaturated monomer At the polymer/polymer interphase in heterophasic systems, radicals from one polymer can recombine with radicals from the other polymer forming a grafted copolymer. The grafted copolymer is a promoter for phase bounding.

Increased phase bounding then results in a stable morphology and inhibits coalescence during further processing.

Stabilisation of the phase morphology is particularly pronounced, when the reactively modified heterophasic copolymer further comprises chemically bound bifunctionally unsaturated monomers. Preferred bifunctionally unsaturated monomers are butadiene, isoprene, dimethylbutadiene, divinylbenzene or mixtures thereof.

"Bifunctionally unsaturated" as used above means the presence of two nonaromatic double bonds, as in e.g. divinylbenzene or cyclopentadiene. Only such bifunctionally unsaturated compounds are used which can be polymerised with the aid of free radicals. The bifunctionally unsaturated monomer is in its chemically bound state not actually "bifunctionally unsaturated", because the two double bonds are each used for a covalent bond to the polymer chains of the matrix and/or the elastomeric polymer.

Suitable organic peroxides are:
- acyl peroxides, such as benzoyl peroxide, 4-chlorobenzoyl peroxide, 3-methoxybenzoyl peroxide and/or methylbenzoyl peroxide
- alkyl peroxides such as allyl tert-butyl peroxide, 2,2-bis(tert-butylperoxybutane), 1,1-bis(tert-butylperoxy)-3,3,5-trimethylcyclohexane, n-butyl 4,4-bis(tert-butylperoxy)valerate, diisopropylaminomethyl tert-amyl peroxide, dimethylaminomethyl tert-amyl peroxide, diethylaminomethyl tert-butyl peroxide, dimethylaminomethyl tert-butyl peroxide, 1,1-di(tert-amylperoxy)cyclohexane, tert-amyl peroxide, tert-butyl cumyl peroxide, tert-butyl peroxide, and/or 1-hydroxybutyl n-butyl peroxide;
- peresters and peroxycarbonates, such as butyl peracetate, cumyl peracetate, cumyl perpropionate, cyclohexyl peracetate, di-tert-butyl peradipate, di-tert-butyl perazelate, di-tert-butyl perglutarate, di-tert-butyl perphthalate, di-tert-butyl persebacate, 4-nitrocumyl perpropionate, 1-phenylethyl perbenzoate, phenylethyl nitroperbenzoate, tert-butyl bicyclo[2.2.1]heptanepercarboxylate, tert-butyl 4-carbomethoxyperbutyrate, tert-butyl cyclobutanepercarboxylate, tert-butyl cyclohexylperoxycarboxylate, tert-butyl cyclopentylpercarboxylate, tert-butyl cyclopropanepercarboxylate, tert-butyl dimethylpercinnamate, tert-butyl 2-(2,2-diphenylvinyl)perbenzoate, tert-butyl 4-methoxyperbenzoate, tert-butyl perbenzoate, tert-butyl carboxycyclohexane, tert-butyl pernaphthoate, tert-butylperoxy isopropyl carbonate, tert-butyl pertoluate, tert-butyl 1-phenylcyclopropylpercarboxylate, tert-butyl 2-propylperpenten-2-oate, tert-butyl 1-methylcyclopropylpercarboxylate, tert-butyl 4-nitrophenylperacetate, tert-butyl nitrophenylperoxycarbamate, tert-butyl N-succinimidopercarboxylate, tert-butyl-percrotonate, tert-butylpermaleic acid, tert-butyl permethacrylate, tert-butyl peroctoate, tert-butylperoxy isopropyl carbonate, tert-butyl perisobutyrate, tert-butyl peracrylate and/or tert-butyl perpropionate;
and mixtures thereof.

The unmodified polymers a) of the claimed composition are propylene homopolymers, copolymers of propylene with ethylene and/or C₄-C₁₀ α-olefins, and compositions of propylene homopolymers and/or copolymers with an elastomeric copolymer, or mixtures of the polymers mentioned.

Preferably the basic propylene polymer composition comprises 90 - 100 wt% propylene homopolymer and/or a copolymer of more than 80 wt% of propylene and up to 20 wt% of ethylene and/or a C₄-C₁₀ α-olefin and 0 - 10% of an elastomeric copolymer of from 20 - 80 wt% of ethylene and 80 - 20% of propylene and/or a C₄-C₁₀ α-olefin where the elastomeric copolymer is discontinuously distributed in the polymer composition and which propylene polymer composition a) has an MFR > 10g/10min(230°C/2.16kg).

The basic polymer composition preferably shows good gloss, i.e. gloss (measured at 20°) should be > 60 determined according to DIN 67530.

To the basic polymer composition up to 10 wt% of the modified heterophasic polymer is added as impact booster. Impact strength is therefore improved, without affecting the other desired properties, i.e. tensile modulus and gloss.

The modified heterophasic copolymers and also the polypropylene composition of the present invention may comprise, as additives, from 0.01 to 2.5% by weight of stabilisers and/or from 0.1 to 1% by weight of antistats and/or from 0.2 to 3% by weight of pigments and/or from 1 to 40% reinforcing materials and/or from 2 to 20% by weight of flame retardants and/or from 0.01 to 1 % by weight of processing aids, either based on the weight of the modified heterophasic copolymer or the total weight of the polypropylene composition.

Stabilisers comprise mixtures of from 0.01 to 0.6% by weight of phenolic antioxidants, from 0.01 to 0.6% by weight of free-arylbenzofuranones, from 0.01 to 0.6% by weight of processing stabilisers based on phosphites, from 0.01 to 0.6% by weight of high temperature stabilisers based on disulphides and thioethers and/or from 0.01 to 0.8% by weight of sterically hindered amines (HALS).

Suitable phenolic antioxidants are 2-tert-butyl-4,6-dimethylphenol, 2,6-di-tert-butyl-4-methylphenol, 2,6-di-tert-butyl-4-isoamylphenol, 2,6-di-tert-butyl-4-ethylphenol, 2-tert-butyl-4,6-diisopropylphenol, 2,6,dicyclopentyl-4-methylphenol, 2,6-di-tert-butyl-4-methoxymethylphenol, 2-tert-butyl-4,6-dioctadecylphenol, 2,5-di-tert-butylhydroquinone, 2,6-di-tert-butyl-4,4-dihexadecyloxyphenol, 2,2'-methylenebis(6-tert-butyl-4-methylphenol), 4,4'-thiobis(6-tert-butyl-2-methylphenol), octadecyl 3-(3,5-di-tert-butyl-4-hydroxyphenyl)propionate, 1,3,5-trimethyl-2,4,6-tris(3',5'-di-tert-butyl-4-hydroxybenzyl)benzene and/or pentaerythritol tetrakis(3-(3,5-di-tert-butyl-4-hydroxyphenyl)propionate).
A particularly suitable benzofuranone derivative is 5,7-di-tert-butyl 3-(3,4-dimethylphenyl)-3H-benzofuran-2-one.
Particularly suitable HALS compounds are bis-2,2,6,6-tetramethyl-4-piperidyl sebacate and/or poly(6-((1,1,3,3-tetramethylbutyl)amino)-1,3,5-triazine-2,4-diyl)-((2,2,6,6-tetramethyl-4-piperidyl)-imino)-1,6-hexanedinyl((2,2,6,6-tetramethyl-4-piperidyl)imino).

According to an advantageous embodiment the polypropylene compositions of the present invention comprise up to 30 wt% of fillers.
Fillers preferably are Al₂O₃, Al(OH)₃, barium sulphate, calcium carbonate, glass beads, wood flour, siliceous earth, hollow microbeads, carbon black, talc and/or wollastonite. Stiffness-enhancing fillers, such as e.g. talc, are especially preferred.

Reinforcing materials preferably are aramid fibres, cellulose fibres, flax, jute, kenaf, glass fibres, microfibres made of liquid-crystalline polymers and/or polytetrafluoroethylene fibres.

Suitable processing aids are calcium stearate, magnesium stearate and/or waxes.

The resulting polymer compositions show high gloss and excellent stiffness/impact balance as shown in the examples.

The novel compositions may be used for the production of articles especially household articles , laboratory equipment.

These articles may be produced by known processes, for example by extrusion, injection moulding, blow moulding or thermoforming.

Blow moulded articles may be produced by extrusion blow moulding, extrusion stretch blow moulding, injection blow moulding and injection blow moulding.

The following properties are determined on standard injection-moulded test specimens:
**Charpy impact strength**
   at 23°C according to DIN 179/1eA
**Gloss**
   according to DIN 67530
**MFR**
   The melt flow rates were measured with a load of 2.16 kg at 230 °C. The melt flow rate is that quantity of polymer in grams which the test apparatus standardized to ISO 1133 extrudes within 10 minutes at a temperature of 230 °C under a load of 2.16 kg.
**Dart Drop Height**
   0.5 kg/d40 according to ASTM D1709
**Tensile modulus**
   The tensile modulus was determined on 4 mm thick samples according to the method of ISO 527-3 at 1mm/min and 23°C. The compression moulded test specimens were made in a positive mould according to ISO 1873-2.

### Examples:

### 1. Preparation of the modified heterophasic polymers

### a) Modification method 1: Example

A heterophasic propylene polymer in powder form (MFR=7,5g/10 min at 230°C/2.16 kg), comprising 72 % by weight of a propylene homopolymer (matrix phase) and 28% by weight of an elastomeric ethylene-propylene copolymer (ethylene content 41% by weight) is metered continuously into a continuous heatable through-flow mixer. 0.1% by weight of calcium stearate and 0.15% by weight of tert-butyl perbenzoate, based in each case on the heterophasic copolymer, are then metered continuously into the through-flow mixer. With thorough and homogeneous mixing at 45°C, the mixture of heterophasic copolymer, peroxide and additive is loaded by sorption with 0.2% by weight of divinylbenzene, based on the heterophasic copolymer, using a divinylbenzene-nitrogen mixture with a residence time of 6 min at 82°C. The reaction mixture is transferred to a twin-screw extruder (temperature profile 25/160/160/160/165/160/190/220/220/230°C, throughput 10 kg/h) and, in contact with the divinylbenzene-nitrogen mixture and with addition of 0.1% by weight of tetrakis[methylene (3,5-di-tert-butylhydroxyhydrocinnamate)]methane and 0.1% by weight of tris(2,4-di-tert-butylphenyl) phosphite, heated and melted, subjected to preliminary devolatilisation with water metered in as entrainer and then to intensive devolatilisation, discharged and pelletised.
The resultant modified heterophasic copolymer has a content of chemically bound divinylbenzene of 0.17% by weight, determined by IR spectroscopy, and a melt index of 15g/10 min at 230°C/2.16 kg.

### b) Modification method 2:

A heterophasic propylene polymer in powder form (MFR=13g/10 min at 230°C/2.16 kg), comprising 71 % by weight of a propylene homopolymer (matrix phase) and 29% by weight of an elastomeric ethylene-propylene copolymer (ethylene content 41% by weight) premixed with 0.1% by weight of calcium stearate, was fed continuously into the twin screw extruder with a screw diameter of 25mm and a length-diameter-ratio L/D of 40 (temperature profile 20/170/180/70/180/190/190/190/200/200/210 °C, throughput 10kg/h)

After heating and melting of the heterophasic copolymer (zones 1, 2 and 3), tert-butyl perbenzoate was injected directly into zone 4 of the extruder with a concentration of 0.15% by weight, based on the heterophasic copolymer.

The addition of 0.25% by weight of divinylbenzene was realised by the injection of this co-agent into the same zone 4 of the extruder, however, through a second injection port.
The polymer melt / liquid /gas mixture was passed through the extruder, then to intensive devolatilisation, discharged and pelletised.
The resultant modified heterophasic copolymer has a content of chemically bound divinylbenzene of 0.21% by weight, determined by IR spectroscopy, and a melt index of 15g/10 min at 230°C/2.16 kg.

### 2) Compositions

### Example 1:

Base polymer composition a) comprises 100% by weight of a homo polypropylene with MFR=20g/10min (230°C/2.16 kg).

| | a) Base composition 1 | a) + 10wt% modified PP b) |
|---|---|---|
| MFR (g/10min) | 20 | 19 |
| Tensile Modulus (MPa) | 2070 | 1850 |
| Charpy Notched Impact Strength (kJ/m²) | 2.8 | 4.9 |
| Dart Drop High by 0.5kg/d40 (cm) | <30 | 160 |
| Gloss at 20° | 70 | 76.5 |

### Example 2:

Base polymer composition a) comprises 93% by weight of a homo polypropylene with MFR=20g/10min (230°C/2.16 kg) and 7% by weight of an elastomeric ethylene- propylene-copolymer (35 wt% ethylene) with MFR=20g/10min (230°C/2.16 kg). The base polymer composition has an MFR=20g/10min (230°C/2.16 kg).

| | a) Base composition 2 | a)+ 5wt% modified PP b) |
|---|---|---|
| MFR (g/10min) | 20 | 20 |
| Tensile Modulus (MPa) | 1950 | 1940 |
| Charpy Notched Impact Strength (kJ/m²) | 3.9 | 4.9 |
| Dart Drop High by 0.5kg/d40 (cm) | 115 | 200 |
| Gloss at 20° | 75 | 74.2 |

### Example 3:

Base polymer composition a) comprises 90% by weight of a homo polypropylene with MFR=20g/10min (230°C/2.16 kg) and 10% by weight of an elastomeric ethylene-octene-copolymer (24 wt % 1-octene) with MFR=30g/10min (230°C/2.16 kg). The base polymer composition has an MFR=22g/10min (230°C/2.16 kg).

| | a) Base composition 3 | a) + 10wt% modified PP b) |
|---|---|---|
| MFR (g/10min) | 22 | 20 |
| Tensile Modulus (MPa) | 1810 | 1780 |
| Charpy Notched Impact Strength (kJ/m²) | 3.9 | 4.9 |
| Dart Drop High by 0.5kg/d40 (cm) | 179 | 245 |
| Gloss at 20° | 71 | 68 |

## Claims

1. Process for preparing a polypropylene composition, comprising
A) 99-90 wt% of a composition comprising 70-100 wt% of a propylene homopolymer and/or a copolymer of more than 80% of a propylene and of up to 20 wt% of ethylene and/or a C₄-C₁₀ α-olefin and 0-30 wt% of an elastomeric copolymer from 20 - 80 wt% of ethylene and 80-20 wt% of propylene and/or a C₄-C₁₀ α-olefin, where the elastomeric copolymer is discontinuously distributed within the polymer composition and which propylene polymer composition has an MFR > 10 g/10 min (230°C/2.16 kg) and
B) 1-10 wt% reactively modified heterophasic copolymer with a phase morphology stabilized by chemically bound bifunctionally unsaturated monomers,
comprising the steps of:
a) melting of the heterophasic copolymer, preferably in an extruder
b) adding from 0.05 to 3 wt% based on the heterophasic copolymer of an organic peroxide as thermally decomposable free radical forming agent, directly into the polymer melt
c) further adding from 0.01 to 10 wt% based on the heterophasic copolymer of bifunctionally unsaturated monomers directly into the melt
d) heating the melt to 220-250°C to remove unreacted monomers and decomposition products;
wherein the reactively modified heterophasic copolymer is a propylene polymer composition comprising 50 - 90 wt% of a matrix phase comprising a propylene homopolymer and/or a copolymer of more than 80% of propylene and of up to 20 wt% of ethylene and/or a C₄-C₁₀ α-olefin and 10-50 wt% of an elastomeric copolymer of 20-70 wt% of ethylene and 80-30 wt% of propylene and/or a C₄-C₁₀ α-olefin, where the elastomeric copolymer is discontinuously distributed in the matrix phase and which reactively modified heterophasic copolymer has an MFR of > 5 g/10 min (230°C/2.16 kg), preferably > 10 g/10 min (230°C/2.16 kg), reactively modified by treatment with free radical forming agents;
and added the reactively modified heterophasic copolymer to component A),
wherein the bifunctionally unsaturated monomers are butadiene, isoprene, dimethylbutadiene, divinylbenzene or mixtures thereof.

2. Process according to claim 1, wherein the reactively modified heterophasic copolymer comprises 55 - 75 wt% of a propylene homopolymer and/or a copolymer of more than 85 wt% of propylene and of up to 15 wt% of ethylene and/or a C₄-C₁₀ α-olefin and 25 - 45 wt% of an elastomeric copolymer of 20-70 wt% of ethylene and 80-30 wt% of propylene and/or a C₄-C₁₀ α-olefin.

3. Process according to one of the claims 1 or 2, wherein further up to 30 wt% fillers are blended with the polypropylene composition.

4. Process according to one of the claims 1 to 3 further comprising the step of forming articles by extrusion, injection molding, blow molding or thermoforming.

## Patentansprüche

1. Verfahren zum Herstellen einer Polypropylenzusammensetzung, umfassend
A) 99-90 Gew.-% einer Zusammensetzung umfassend 70-100 Gew.-% eines Propylenhomopolymers und/oder eines Copolymers von mehr als 80 % eines Propylens und von bis zu 20 Gew.-% Ethylen und/oder eines C₄-C₁₀-α-Olefins und 0-30 Gew.-% eines elastomeren Copolymers aus 20-80 Gew.-% Ethylen und 80-20 Gew.-% Propylen und/oder eines C₄-C₁₀-α-Olefins, wobei das elastomere Copolymer in der Polymerzusammensetzung diskontinuierlich verteilt ist und wobei die Propylenpolymerzusammensetzung einen MFR > 10 g/10 min (230 °C/2,16 kg) aufweist, und
B) 1-10 Gew.-% reaktiv modifiziertes heterophasisches Copolymer mit einer durch chemisch gebundene bifunktionell ungesättigte Monomere stabilisierten Phasenmorphologie,
umfassend die Schritte:
a) Schmelzen des heterophasischen Copolymers, vorzugsweise in einem Extruder
b) Zugeben von 0,05 bis 3 Gew.-%, bezogen auf das heterophasische Copolymer, eines organischen Peroxids als thermisch zersetzbarer Radikalbildner, direkt in die Polymerschmelze
c) weiteres Zugeben von 0,01 bis 10 Gew.-%, bezogen auf das heterophasische Copolymer, bifunktionell ungesättigter Monomere direkt in die Schmelze
d) Erwärmen der Schmelze auf 220-250 °C, um nicht umgesetzte Monomere und Zersetzungsprodukte zu entfernen;
wobei das reaktiv modifizierte heterophasische Copolymer eine Propylenpolymerzusammensetzung ist, die 50-90 Gew.-% einer Matrixphase, umfassend ein Propylenhomopolymer und/oder ein Copolymer von mehr als 80 % Propylen und von bis zu 20 Gew.-% Ethylen und/oder eines C₄-C₁₀-α-Olefins, und 10-50 Gew.-% eines elastomeren Copolymers von 20-70 Gew.-% Ethylen und 80-30 Gew.-% Propylen und/oder eines C₄-C₁₀-α-Olefins umfasst, wobei das elastomere Copolymer in der Matrixphase diskontinuierlich verteilt ist und wobei das reaktiv modifizierte heterophasische Copolymer einen MFR von > 5 g/10 min (230 °C/2,16 kg), vorzugsweise > 10 g/10 min (230 °C/2,16 kg) aufweist und durch Behandlung mit Radikalbildnern reaktiv modifiziert ist;
und wobei das reaktiv modifizierte heterophasische Copolymer zu Komponente A) zugegeben wird,
wobei die bifunktionell ungesättigten Monomere Butadien, Isopren, Dimethylbutadien, Divinylbenzol oder Mischungen davon sind.

2. Verfahren nach Anspruch 1, wobei das reaktiv modifizierte heterophasische Copolymer 55-75 Gew.-% eines Propylenhomopolymers und/oder eines Copolymers von mehr als 85 Gew.-% Propylen und von bis zu 15 Gew.-% Ethylen und/oder eines C₄-C₁₀-α-Olefins und 25-45 Gew.-% eines elastomeren Copolymers von 20-70 Gew.-% Ethylen und 80-30 Gew.-% Propylen und/oder eines C₄-C₁₀-α-Olefins umfasst.

3. Verfahren nach einem der Ansprüche 1 oder 2, wobei ferner bis zu 30 Gew.-% Füllstoffe mit der Polypropylenzusammensetzung vermischt werden.

4. Verfahren nach einem der Ansprüche 1 bis 3, ferner umfassend den Schritt der Bildung von Artikeln durch Extrusion, Spritzgießen, Blasformen oder Warmformen.

## Revendications

1. Procédé pour préparer une composition de polypropylène, comprenant
A) 99 à 90 % en poids d'une composition comprenant 70 à 100 % en poids d'un homopolymère de propylène et/ou d'un copolymère constitué de plus de 80 % de propylène et de jusqu'à 20 % en poids d'éthylène et/ou d'une α-oléfine en C₄ à C₁₀, et 30 à 0 % en poids d'un copolymère élastomérique constitué de 20 à 80 % en poids d'éthylène et de 80 à 20 % en poids de propylène et/ou d'une α-oléfine en C₄ à C₁₀, où le copolymère élastomérique est réparti de manière discontinue dans la composition de polymère et laquelle composition de polymère de propylène a une valeur MFR > 10 g/10 min (230 °C/2,16 kg) et
B) 1 à 10 % en poids de copolymère hétérophasique modifié de manière réactive, avec une morphologie de phase stabilisée par des monomères insaturés de manière bifonctionnelle et liés chimiquement,
comprenant les étapes consistant à :
a) faire fondre le copolymère hétérophasique, de préférence dans une extrudeuse
b) ajouter de 0,05 à 3 % en poids, basés sur le copolymère hétérophasique, d'un peroxyde organique en tant qu'agent de formation de radicaux libres thermiquement décomposable, directement dans la masse fondue de polymère
c) ajouter également de 0,01 à 10 % en poids, basés sur le copolymère hétérophasique, de monomères insaturés de manière bifonctionnelle, directement dans la masse fondue
d) chauffer la masse fondue jusqu'à 220-250 °C pour éliminer des monomères n'ayant pas réagi et des produits de décomposition ;
dans lequel le copolymère hétérophasique modifié de manière réactive est une composition de polymère de propylène comprenant 50 à 90 % en poids d'une phase formant matrice, comprenant un homopolymère de propylène et/ou un copolymère constitué de plus de 80 % de propylène et de jusqu'à 20 % en poids d'éthylène et/ou d'une α-oléfine en C₄ à C₁₀, et 50 à 10 % en poids d'un copolymère élastomérique constitué de 20 à 70 % en poids d'éthylène et de 80 à 30 % en poids de propylène et/ou d'une α-oléfine en C₄ à C₁₀, où le copolymère élastomérique est réparti de manière discontinue dans la phase formant matrice et lequel copolymère hétérophasique modifié de manière réactive a une valeur MFR > 5 g/10 min (230 °C/2,16 kg), de préférence > 10 g/10 min (230 °C/2,16 kg), avec modification de manière réactive par un traitement à l'aide d'agents de formation de radicaux libres ;
et ajouter le copolymère hétérophasique modifié de manière réactive au composé A),
les monomères insaturés de manière bifonctionnelle étant le butadiène, l'isoprène, le diméthylbutadiène, le divinylbenzène et des mélanges de ceux-ci.

2. Procédé selon la revendication 1, dans lequel le copolymère hétérophasique modifié de manière réactive comprend de 55 à 75 % en poids d'un homopolymère de propylène et/ou d'un copolymère constitué de plus de 85 % en poids de propylène et de jusqu'à 15 % en poids d'éthylène et/ou d'une α-oléfine en C₄ à C₁₀, et de 45 à 25 % en poids d'un copolymère élastomérique constitué de 20 à 70 % en poids d'éthylène et de 80 à 30 % en poids de propylène et/ou d'une α-oléfine en C₄ à C₁₀.

3. Procédé selon l'une des revendications 1 et 2, dans lequel également jusqu'à 30 % en poids de charges sont mélangés avec la composition de polypropylène.

4. Procédé selon l'une des revendications 1 à 3, comprenant en outre l'étape consistant à former des objets par extrusion, moulage par injection, moulage par soufflage ou thermoformage.
